# EUROPÄISCHE PATENTANMELDUNG

(11) **EP 0 796 880 A2**
(43) Veröffentlichungstag der Anmeldung: **24.09.1997**
(21) Anmeldenummer: 97103941.7
(22) Anmeldetag: 10.03.1997
(51) Int. Cl.: C08G 18/10, C08G 18/76, C08G 18/79, C08G 18/80, C08G 18/48, C08K 5/523, C08K 5/42, C08K 5/15, C09D 175/04

(54) **Feuchtigkeitshärtende Einkomponenten-Beschichtungsmittel**

(30) Priorität: 21.03.1996 DE 19605584; 26.03.1996 DE 19611851
(71) Anmelder: BAYER AG, 51368 Leverkusen (DE)
(72) Erfinder: Schwindt, Jürgen, Dr., 51375 Leverkusen (DE); Hentschel, Karl-Heinz, Dr., 51429 Bergisch-Gladbach (DE); Schönborn, Manfred, 51375 Leverkusen (DE); Rath, Harald, 51465 Bergisch-Gladbach (DE)

(57) **Zusammenfassung**

Die Erfindung betrifft feuchtigkeitshärtende Einkomponenten-Beschichtungsmittel auf Basis einer Polyisocyanatkomponente, bestehend aus einem Gemisch aus ausgewählten aromatischen Polyisocyanaten und Weichmachern bzw. hochsiedenden Lösemitteln, sowie die Verwendung dieser Beschichtungsmittel zur Herstellung von Überzügen. Im besonderen betrifft die Erfindung die Verwendung dieser Beschichtungsmittel zur Herstellung von Grund- und/oder Zwischenbeschichtungen im Korrosionsschutz.

## Beschreibung

Die Erfindung betrifft feuchtigkeitshärtende Einkomponenten-Beschichtungsmittel auf Basis einer Polyisocyanatkomponente, bestehend aus einem Gemisch aus ausgewählten aromatischen Polyisocyanaten und Weichmachern bzw. hochsiedenden Lösemitteln, sowie die Verwendung dieser Beschichtungsmittel zur Herstellung von Überzügen. Im besonderen betrifft die Erfindung die Verwendung dieser Beschichtungsmittel zur Herstellung Von Grund- und/oder Zwischenbeschichtungen im Korrosionsschutz.

Unter dem Einfluß von Feuchtigkeit aushärtbare Beschichtungsmittel, die als Bindemittel organische Polyisocyanate, insbesondere höhermolekulare NCO-Prepolymere enthalten, sind seit langem bekannt (vgl. z.B. H. Kittel, Lehrbuch der Lacke und Beschichtungen, 1973, Verlag W.A. Coulomb; Bd. 1, Teil 2, Seite 573 bis 576 oder Houben Weyl, Methoden der organischen Chemie, Band E 20, Seite 1646, Georg Thieme Verlag 1987). Dies hat einen prinzipiellen Nachteil der feuchtigkeitshärtenden Einkomponenten-Polyurethanlacke zur Folge, nämlich, daß derartige Lacksysteme nur bis zu einer bestimmten Schichtdicke appliziert werden können. Bei Applikation höherer Schichtdicken kann das im Zuge der Härtungsreaktion freigesetzte Kohlendioxid nicht mehr aus der Beschichtung entweichen und es kommt zur Blasenbildung. Zur Erzielung hoher Schichtdicken muss demzufolge eine feuchtigkeitshärtende Einkomponenten-Polyurethanbeschichtung in mehreren Arbeitsgängen auf das Substrat aufgebracht werden, was insbesondere mit wirtschaftlichen Nachteilen verbunden ist.

Für lösemittelfreie Einkomponenten-Polyurethanbeschichtungen sind maximale Schichtdicken von bis zu 300 µm bekannt. Diese lösemittelfreien Einkomponenten-Polyurethanlacke sind für viele Applikationsarten und Einsatzzwecke jedoch zu hochviskos. Um leicht in blasen- und läufeifreiem Zustand und mit guter Filmhaftung appliziert werden zu können, enthalten in der Lacktechnologie übliche Beschichtungsmittel-Rezepturen deutliche Mengen flüchtiger Lösemittel. Im Zuge der weltweiten Bemühungen um Schonung der Umwelt vor schädlichen Emissionen und um einen ökonomischeren Umgang mit unseren Resourcen, kann dies immer Weniger akzeptiert werden. Lösemittelhaltige aromatische Polyisocyanate, wie sie heute in Einkomponenten-Polyurethan-Korrosionsschutzbeschichtungsmitteln verwendet werden, lassen im allgemeinen blasenfreie Trockenfilm-Schichtdicken von nur ca. 80 µm zu.

Zwar gibt es auch spezielle niedrigviskose lösemittelfreie aromatische Polyisocyanate, die nach Trocknung höhere Filmschichtdicken ergeben, doch resultieren dabei sprödharte Beschichtungen, die leicht Risse bilden. Darüber hinaus ist zu fordern, daß umweltfreundlichere und leicht verarbeitbare Polyurethan-Korrosionsschutzbeschichtungsmittel bei Überarbeiten mit einer zweiten Schicht des gleichen Beschichtungsmittels oder mit einem anderen Polyurethan-Korrosionsschutzbeschichtungsmittel auch nach längeren Wartezeiten (bezogen auf den Zeitpunkt der Applikation) ausreichende Zwischenschichthaftung aufweisen, wie dies auch bei den lösemittelhaltigen Beschichtungssystemen des Standes der Technik der Fall ist.

Die Aufgabe der vorliegenden Erfindung folglich darin, Bindemittel für Ein- komponenten-Beschichtungsmittel auf Basis von Polyurethanen bereitzustellen, die bei ähnlicher Applikationsviskosität und ähnlicher Oberflächenschutz-Wirksamkeit (z.B. Korrosionsschutz-Wirkung) ohne zusätzliche flüchtige Lack-Lösemittel eine deutliche Erhöhung der blasenfreien Schichtdicke sowie eine problemlose Überarbeitung mit einer weiteren Schicht Einkomponenten-Beschichtungsmittel auch nach längeren Wartezeiten ermöglichen.

Gegenstand der Erfindung sind feuchtigkeitshärtende Einkomponenten-Beschichtungsmittel, bestehend im wesentlichen aus einer Polyisocyanatkomponente als Bindemittel und gegebenenfalls den üblichen Hilfs- und Zusatzmitteln der Lacktechnologie, dadurch gekennzeichnet, daß die Polyisocyanatkomponente aus
A) 100 Gewichtsteilen eines gegebenenfalls Carbodiimid- und/oder Uretonimin-modifizierten Polyisocyanats oder Polyisocyanatgemischs der Diphenylmethanreihe mit einem NCO-Gehalt von 20 bis 33 Gew.-%,
B) 40 bis 150 Gewichtsteilen an NCO-Prepolymeren mit einem NCO-Gehalt von 3,0 bis 20 Gew.-%,
   hergestellt durch Reaktionen von
   a) mindestens einem aromatischen Polyisocyanat mit einem NCO-Gehalt von 20 bis 34 Gew.-% mit
   b) einer unterschüssigen Menge einer Polyhydroxylkomponente, bestehend aus
      b1) mindestens einem Ether-, Ester-, Thioether- und/oder Carbonatgruppen aufweisenden Polyol des Molekulargewichtbereichs 134 bis 6 000, gegebenenfalls in Abmischung mit
      b2) bis zu 40 Gew.-%, bezogen auf das Gesamtgewicht der Komponente b), mindestens eines, der Definition von b1) nicht entsprechenden 1- bis 6-wertigen Alkohols des Molekulargewichtbereichs 32 bis 300, sowie
   c) 0,2 bis 250 Gew.-% eines ausgewählten, nicht hydrolysierbaren oder schwer hydrolysierbaren Weichmachers mit einem Flammpunkt über 150°C und/oder eines ausgewählten hochsiedenden Lösemittels mit einem Flammpunkt über 120°C und einem Siedepunkt (bei Atmosphärendruck) oberhalb 230°C,
besteht.

Gegenstand der Erfindung ist auch die Verwendung dieser Einkomponenten-Beschichtungsmittel zur Beschichtung beliebiger Substrate, insbesondere metallischer. Ein weiterer Gegenstand der Erfindung ist die Verwendung der Einkomponenten-Beschichtungsmittel zur Herstellung von Grund- und/oder Zwischenbeschichtungen ("ersten Deckbeschichtungen") im Korrosionsschutz sowie Lacke und Überzüge, enthaltend die erfindungsgemäßen Einkomponentenbeschichtungsmittel.

Das erfindungsgemäße Beschichtungsmittel besteht im wesentlichen aus einem Gemisch aus 100 Gewichtsteilen der Komponente A), 40 bis 150, vorzugsweise 50 bis 120 Gewichtsteile der Komponente B) und 0,2 bis 250, vorzugsweise 10 bis 100 Gewichtsteilen der Komponente C).

Bei der Komponente A) handelt es sich um gegebenenfalls Carbodiimid- und/oder Uretonimin-modifizierte Polyisocyanate oder Polyisocyanatgemische der Diphenylmethanreihe mit einem NCO-Gehalt von 20 bis 33, vorzugsweise 27 bis 33 Gew.-%. Hierunter sind 4,4'-Diisocyanatodiphenylmethan oder seine Gemische mit 2,4'- und gegebenenfalls 2,2'-Diisocyanatodiphenylmethan oder Gemische dieser Isomeren mit höheren Homologen zu verstehen, wie sie in an sich bekannter Weise durch Phosgenierung von Anilin-Formaldehyd-Kondensaten erhalten werden. Ebenfalls geeignet sind die an sich bekannten, durch Carbodiimidisierung eines Teils der Isocyanatgruppen solcher Polyisocyanate oder Polyisocyanatgemische erhältlichen Carbodiimid- und/oder Uretonimingruppen aufweisende Polyisocyanate, sofern ihr NCO-Gehalt innerhalb der oben genannten Grenzen liegt. Vorzugsweise handelt es sich bei der Komponente A) um bei Raumtemperatur (20°C) flüssige Polyisocyanatgemische.

Bei der Komponente B) handelt es sich um Isocyanatgnippen aufweisende Prepolymere (NCO-Prepolymere) mit einem NCO-Gehalt von 1,5 bis 12, vorzugsweise 2 bis 8 Gew.-% auf Basis aromatischer Polyisocyanate a) und organischer Polyhydroxylverbindungen b).

Unter "NCO-Prepolymer" sind in diesem Zusammenhang theoretisch die entsprechenden monomeren freien Umsetzungsprodukte aus den Ausgangskomponenten a) und b) zu verstehen. Dies bedeutet in der Praxis, daß bei der Herstellung der Komponente B) unter Verwendung leichtflüchtiger Ausgangspolyisocyanate a) wie beispielsweise der bekannten Diisocyanatotoluol-Isomeren (TDI), deren oftmals vorliegender Überschuss im Anschluß an die Herstellung der NCO-Prepolymeren durch Dünnschichtdestillation bis auf einen Restgehalt von weniger als 1,0 Gew.-%, vorzugsweise von weniger als 0,5 Gew.-% entfernt wird, bzw. daß bei der Verwendung von Polyisocyanaten oder Polyisocyanatgemischen der Diphenylmethanreihe der auch als Komponente A) geeigneten Art deren gegebenenfalls zum Einsatz gelangter Überschuss im Umsetzungsprodukt verbleibt, so daß in situ ein Gemisch aus Polyisocyanat A) und (monomerenfreiem) Prepolymer B) resultiert.

Die Herstellung der Komponente B) erfolgt im übrigen durch an sich bekannte Umsetzung der Polyisocyanate a) mit der Polyhydroxylkomponente b) im Temperaturbereich von 20 bis 140°C, vorzugsweise 40 bis 100°C. Setzt man als Komponente a) leichtflüchtige, toxikologisch bedenkliches Diisocyanat, wie z.B. TDI ein, so wird die Umsetzung von a) mit b) vorzugsweise unter Einhaltung eines hohen NCO-Überschusses, entsprechend einem NCO/OH-Äquivalentverhältnis von 20 : 1 bis 40 : 1, vorzugsweise 12 : 1 bis 5 : 1 durchgeführt, worauf sich, wie bereits ausgeführt, eine destillative Entfernung des nicht umgesetzten Isocyanat-Überschusses anschließt.

Setzt man zur Herstellung der Komponente B) als Polyisocyanate a) Polyisocyanate der Diphenylmethanreihe ein, so kann, wie bereits oben ausgeführt, auch ein größerer Überschuss an Komponente a) zum Einsatz gelangen und im Produkt verbleiben um so in situ ein Gemisch aus den Komponenten A) und B) herzustellen. Vorzugsweise wird demzufolge so verfahren, daß bei Verwendung von Polyisocyanaten der Diphenylmethanreihe, die als Komponente A) geeignet sind, zur Herstellung der Komponente B) die Polyisocyanate in einer solchen Menge zum Einsatz gelangen, die einem NCO/OH-Equivalentverhältnis von 3 : 1 bis 40 : 1, vorzugsweise 5 : 1 bis 25 : 1 entsprechen, so daß das resultierende Gemisch aus Komponente A) und in situ hergestellter Komponente B) den oben genannten Angaben bezüglich der Mengenverhältnisse dieser Komponenten entspricht. Selbstverständlich ist es jedoch auch möglich, einem in situ hergestellten Gemisch aus Komponenten A) und B) eine weitere Menge an Polyisocyanat oder Polyisocyanatgemisch der Diphenylmethanreihe der als Komponente A) geeigneten Art zuzusetzen und den Anteil der Komponente A) in dem Gemisch zu erhöhen.

Eine weitere Variante der Herstellung in situ von Gemischen aus Komponenten A) und B) besteht beispielsweise darin, eine Teilmenge eines als Komponente A) geeigneten Polyisocyanats oder Polyisocyanatgemischs mit einer unterschüssigen Menge einer Polyhydroxylverbindung b1) und eine weitere Menge eines als Komponente A) geeigneten Polyisocyanats oder Polyisocyanatgemischs mit einer unterschüssigen Menge eines Alkohols b2) umzusetzen, und anschließend die beiden Umsetzungsprodukte miteinander zu vermischen. Hierbei muss lediglich darauf geachtet werden, daß die Mengen der Ausgangskomponenten A), b1) und b2) so bemessen werden, daß die Konzentration der resultierenden Umsetzungsprodukte im letztendlich erhaltenen Gemisch den obengemachten Ausführungen entsprechen.

Zur Herstellung der Komponente B) geeignete monomere Polyisocyanate a) sind beliebige aromatische Polyisocyanate mit einem NCO-Gehalt von 25 bis 48,3 Gew.-%. Besonders bevorzugt handelt es sich um die aus der Polyurethanchemie an sich bekannten aromatischen Polyisocyanate wie 2,4-Diisocyanatotoluol und dessen technische Gemische mit bis zu 35 Gew.-%, bezogen auf Gemisch, an 2,6-Diisocyanatotoluol oder Polyisocyante, bzw. Polyisocyanatgemische der Diphenylmethanreihe der auch als Komponente A) geeigneten Art, wobei selbstverständlich bei separater Herstellung der Komponente B) die Polyisocyanatkomponente A) und die zur Herstellung der NCO-Prepolymeren B) eingesetzten Polyisocyanate a) auch verschieden sein können.

Bei der zur Herstellung der NCO-Prepolymeren eingesetzten Polyhydroxylkomponente b) handelt es sich b1) um Ether-, Ester-, Thioether- und/oder Carbonatgruppen aufweisende Polyhydroxylverbindungen des Molekulargewichtsbereichs 134 bis 6000, vorzugsweise 500 bis 6000 oder um Gemische derartiger Polyhydroxylverbindungen b1) mit bis zu 40, vorzugsweise bis zu 20 Gew.-%, bezogen auf das Gesamtgewicht der Komponente b), an der Definition von b1) nicht entsprechenden 1- bis 6-wertigen Alkoholen des Molekulargewichtsbereichs 32 bis 300. Vorzugsweise besteht die Komponente b) ausschließlich aus Polyhydroxylverbindungen b1).

Geeignete Polyhydroxylverbindungen b1) sind die aus der Polyurethanchemie an sich bekannten Ether-, Ester-, Thioether- und/oder Carbonatgruppen aufweisenden Polyhydroxylverbindungen des genannten Molekulargewichtsbereichs, wobei sich hier, vor- und nachstehend alle Angaben zum Molekulargewicht von Polyhydroxylverbindungen auf das aus Hydroxylgruppengehalt und Hydroxylfunktionalität errechenbare Molekulargewicht beziehen.

Zu den bevorzugten Polyhydroxylverbindungen b1) gehören die aus der Polyurethanchemie an sich bekannten höhermolekularen Polyetherpolyole, wie sie in bekannter Weise durch Alkoxylierung geeigneter Startermoleküle, vorzugsweise unter Verwendung von Ethylenoxid und/oder Propylenoxid, erhältlich sind. Geeignete Startermoleküle sind einfache mehrwertige Alkohole der auch als Komponente b2) nachstehend näher beschriebenen Art oder auch Amine, wie Ethylendiamin, Hexamethylendiamin, Anilin, oder Aminoalkohole, wie beispielsweise Ethanolamin oder Propanolamin. Beliebige Gemische der Startermoleküle können ebenfalls eingesetzt werden. Die bevorzugten, als Komponente b1) geeigneten Polyetherpolyole weisen im allgemeinen eine mittlere Hydroxylfunktionalität von 2 bis 4 auf.

Die bevorzugten Alkohole b1) weisen eine mittlere Hydroxylfunktionalität von 2 bis 3 auf.

Bei den gegebenenfalls mitzuverwendenden Alkoholen b2) handelt es sich um 1- bis 6-wertige Alkohole des Molekulargewichtsbereichs 32 bis 300, die von den Alkoholen b1) verschieden sind. Beispielhaft genannt seine einfache ein- oder mehrwertige Alkanole, wie beispielsweise Methanol, Ethanol, n-Hexanol, 2-Ethylhexanol, Ethylenglykol, Propylenglykol, Glycerin, Trimethylolpropan, Pentaerythrit und/oder Sorbit, Aminoalkohole, wie beispielsweise Ethanolamin oder N,N-Dimethylethanolamin oder Diethylenglykol. Bei (Mit-)Verwendung von Aminoalkoholen mit tertiären Stickstoffatomen, wie beispielsweise N,N-Dimethylethanolamin, als Komponente b2) werden gleichzeitig als Katalysator wirkende Stickstoffatome in die Bindemittel eingebaut.

Bei der Komponente C) handelt es sich um nicht oder schwer hydrolysierbare Weichmacher mit einem Flammpunkt über 150°C und/oder spezielle hochsiedende Lösemittel mit einem Flammpunkt über 120° und einem Siedepunkt (bei Atmosphärendruck) über 230°C. Zu den erfindungsgemäß als Komponente C) einzusetzenden Weichmachern zählen handelsübliche Phenyl-alkylsulfonate (Mesamoll®, Bayer) und Phosphorsäureester (z.B. Disflamoll® TOF, Disflamoll ® DPK, Bayer). Als hochsiedende Lösemittel mit den beschriebenen Eigenschaften sind insbesondere cyclische Carbonatester, wie Ethylencarbonat oder 1,2-Propylencarbonat (Texacar® EC, Texacar® PC, Tecaco Chemicals) zu nennen.

Die erfindungsgemäßen Polyisocyanatgemische sind niedrigviskos und härten unter dem Einfluss von Luftfeuchtigkeit auch in Schichtdicken von bis zu 150 µm blasenfrei bei überhaupt keinem bzw. erheblich geringerem Gehalt an flüchtigen Lösemitteln, als dem Stand der Technik entsprechend. Desweiteren lassen sich damit erhaltene Beschichtungsfilme auch nach längerer Zeit problemlos mit einer weiteren Schicht, enthaltend ein erfindungsgemäßes feuchtigkeitshärtendes Einkomponenten-Beschichtungsmittel, überarbeiten.

Aufgrund der blasenfreien Aushärtung in hoher Schichtdicke eignen sich die erfindungsgemäßen Polyisocyanatgemische hervorragend als Bindemittel für feuchtigkeitshärtende Einkomponenten-Beschichtungsmittel für sehr unterschiedliche Substrate, bevorzugt für metallische Substrate, und besonders bevorzugt in Grundbeschichtungen und/oder Zwischenbeschichtungen (auch "1. Deckbeschichtungen" genannt) für den Korrosionsschutz. Hierzu gelangen die erfindungswesentlichen Polyisocyanatgemische nach Vermischen mit üblichen Hilfs- und Zusatzmitteln der Lacktechnologie zur Anwendung oder aber ohne weitere Zusätze als Klarlacke.

Geeignete Hilfs- und Zusatzmittel sind insbesondere Füllstoffe, Pigmente, Lösemittel, Trockenmittel, Katalysatoren, Verlaufshilfsmittel und dergleichen. Besonders vorteilhaft ist die Tatsache, daß durch die vorzugsweise besonders niedrige Viskosität der Weichmacherkomponente oder hochsiedenden Lösemittelkomponente C) die Herstellung extrem lösemittelarmer Beschichtungsmittel (<10⁻⁴ Gew.-% flüchtiges Lösemittel) ermöglicht wird.

Bei der Herstellung gebrauchsfertiger Beschichtungsmittel der genannten Art ist es durchaus auch möglich und oftmals sachdienlich, die zum Einsatz gelangenden Hilfs- und Zusatzmittel bzw. einen Teil davon zunächst mit einem Teil der Bindemittelkomponenten A) bis C) zu einer Vormischung abzumischen, und diese Vormischung anschließend mit den übrigen Bestandteilen des Lackes abzumischen. Auch hierbei kommt es lediglich darauf an, daß in den letztendlich erhaltenen Beschichtungsmitteln die einzelnen Bindemittelkomponenten A) bis C) bezüglich ihrer Natur und Menge den oben gemachten Angaben entsprechen.

### Beispiele

In den nachfolgenden Beispielen beziehen sich alle Prozentangaben auf das Gewicht.

Die Angaben bezüglich der quantitativen Zusammensetzung der in den Beispielen genannten Polyisocyanatgemische stellen rechnerische Näherungswerte dar, die lediglich belegen sollen, daß die in den Beispielen genannten Gemische bezüglich ihrer Zusammensetzung innerhalb der erfindungswesentlichen Grenzen liegen. Da bei der Herstellung in situ von Gemischen aus Komponenten A) und B) stets ein hoher Überschuss an Isocyanatkomponente 1 zum Einsatz gelangte, wurde der Berechnung die Annahme zugrundegelegt, daß bei der Herstellung der Gemische eine Keilenverlängerungsreaktion nicht stattfindet. Außerdem wurde der Berechnung die Annahme zugrundegelegt, daß der verbleibende, nicht umgesetzte Überschuss an Isocyanatkomponente 1 ausschließlich aus Diisocyanaten (Molekulargewicht = 250) besteht. Eine genaue Ermittlung der quantitativen Zusammensetzung der Gemische könnte beispielsweise gelpermeationschromatografisch erfolgen.

Folgende Ausgangkomponenten werden eingesetzt:

### Isocyanatkomponente 1

2025 Gewichtsteile eines handelsüblichen Roh-MDI-Gemischs mit einem NCO-Gehalt von 31,5 % und einer Viskosität von 120 mPas (Desmodur® VL, Bayer) werden mit einem Gemisch, bestehend aus 935 Gewichtsteilen eines durch Propoxylierung von Ethylendiamin hergestellten Polyethers vom Molelrulargewicht 3740 und 500 Gewichtsteilen eines durch Propoxylierung von Propylenglykol hergestellten Polyethers vom Molekulargewicht 2000 bei 60°C prepolymerisiert, bis ein NCO-Gehalt von 16,0 % erreicht ist. Das NCO-Prepolymer besitzt eine Viskosität von 6500 mPas (23°C).

### Isocyanatkomponente 2

2000 Gewichtsteile eines destillierten MDI-Gemisches, bestehend aus 65 Gewichtsprozent 2,4'-MDI und 35 Gew.-% 4,4'-MDI werden mit 748 Gewichtsteilen eines durch Propoxylierung von Ethylendiamin hergestellten Polyethers vom Molekulargewicht 3740 und 800 Gewichtsteilen eines durch Propoxylierung von Propylenglykol hergestellten Polyethers vom Molekulargewicht 1000 bei 60°C prepolymerisiert, bis ein NCO-Gehalt von 16,0 % erreicht ist. Das NCO-Prepolymer besitzt eine Viskosität von 1800 mPas (23°C).

### Isocyanstkomponente 3

1000 Gewichtsteile der Isocyanatkomponente 2 werden mit 1000 Gewichtsteilen eines handelsüblichen MDI-Gemisches mit einem NCO-Gehalt von 32,5 % und einer Viskosität von 23 mPas (23°C) (Desmodur ® VL 50, Bayer) abgemischt. Die Mischung hat einen NCO-Gehalt von 23,7 % und eine Viskosität von 300 mPas (23°C).

### Beispiel 1

### Herstellung eines erfindungsgemäßen Klarlacks

In 150 Gewichtsteile eines Weichmachers auf Basis Tris(2-ethylhexyl)-phosphat (Disflamoll® TOF, Bayer) werden bei Raumtemperatur unter Rühren 1000 Gewichtsteile der Isocyanatkomponente 1 eingetragen. Das Rühren wird noch 30 Minuten fortgesetzt, um eine homogene Durchmischung zu erhalten.

| | |
|---|---|
| Viskosität bei 23°C (Auslaufzeit nach DIN 53211, 4 mm Düse) | 445 s |
| NCO-Gehalt | 13,9 % |

### Beispiel 2

### Herstellung eines erfindungsgemäßen Klarlacks

In 300 Gewichtsteile desselben Weichmachers wie im Beispiel 1 werden, wie im Beispiel 1 beschrieben, 1000 Gewichtsteile Isocyanatkomponente 1 zugemischt.

| | |
|---|---|
| Viskosität bei 23°C (Auslaufzeit nach DIN 53211, 4 mm Düse) | 225 s |
| NCO-Gehalt | 12,3 % |

### Beispiele 3 und 4

### Herstellung erfindungsgemäßer Klarlacke

In 150 (Beispiel 3) bzw. 300 Gewichtsteile (Beispiel 4) desselben Weichmachers wie im Beispiel 1 werden, wie ebendort beschrieben, 1000 Gewichtsteile der Isocyanatkomponente 2 zugemischt.

| | Beispiel 3 | Beispiel 4 |
|---|---|---|
| Viskosität bei 23°C (s.o.) | 175 s | 85 s |
| NCO-Gehalt | 13,9 % | 12,3 % |

### Beispiele 5 und 6

### Herstellung erfindungsgemäßer Klarlacke

In 150 (Beispiel 5) bzw. 300 Gewichtsteile (Beispiel 6) desselben Weichmachers wie im Beispiel 1 werden, wie ebendort beschrieben, 1000 Gewichtsteile der Isocyanatkomponente 3 zugemischt.

| | Beispiel 5 | Beispiel 6 |
|---|---|---|
| Viskosität bei 23°C (s.o.) | 43 s | 31 s |
| NCO-Gehalt | 20,6 % | 18,2 % |

### Vergleichsbeispiel 1 (nicht erfindungsgemäß)

Zu 850 Gewichtsteilen der Isocyanatkomponente 1 werden 150 Gewichtsteile einer Mischung, bestehend aus 120 Gewichtsteilen Solventnaphtha (Solvesso® 100, Exxon) und 30 Gewichtsteilen Methoxypropylacetat, zugegeben und 30 Minuten lang weiter gerührt.

| | |
|---|---|
| Viskosität bei 23°C (s.o.) | 124 s |
| NCO-Gehalt | 13,5% |

### Vereleichsbeispiel 2 (nicht erfindungsgemäß)

Zu 850 Gewichtsteilen der Isocyanatkomponente 2 werden 150 Gewichtsteile einer Lösemittelmischung, wie im Vergleichsbeispiel 1 beschrieben, zugegeben und 30 Minuten gerührt.

| | |
|---|---|
| Viskosität bei 23°C (s.o) | 59 s |
| NCO-Gehalt | 13,4 % |

### Vergleichsbeispiel 3 (nicht erfindungsgemäß)

Zu 850 Gewichtsteilen der Isocyanatkomponente 3 werden 150 Gewichtsteile einer Lösemittelmischung, wie im Vergleichsbeispiel 1 beschrieben, zugegeben und 30 Minuten gerührt.

| | |
|---|---|
| Viskosität bei 23°C (s.o.) | 22 s |
| NCO-Gehalt | 19,9 % |

### Versuche zu den anstrichtechnischen Eigenschaften und der Korrosionsschutz-Wirksamkeit

### A) Maximal erreichbare Trockenfilmdicken

Zur Bestimmung dieser lacktechnischen Eigenschaft werden die Klarlacke entsprechend den Beispielen 1 bis 6, den Vergleichsbeispielen 1 bis 3 und auch den Isocyanatkomponenten 1 bis 3 mit Hilfe eines Schichtdickenkeils auf Glasplatten aufgezogen. Die Nassfilmdicken steigen dabei bis ca. 1000 µm an. Nach dem Trocknen der Filme wird mit einem Schichtdickenmesser an den Stellen die Trockenfilmdicke bestimmt, an denen die verstärkte Bildung von Kohlendioxid-Gasbläschen im Film beobachtet wird. Die nachstehend angegebenen Werte stellen Mittelwerte aus jeweils fünf Einzelmessungen dar.

| | maximal erzielbare Trockenfilmdicke [µm] |
|---|---|
| Beispiel 1 | 480 |
| Beispiel 2 | 1000 |
| Beispiel 3 | 430 |
| Beispiel 4 | 480 |
| Beispiel 5 | 500 |
| Beispiel 6 | 1000 |
| Isocyanatkomponente 1 | 140 |
| Isocyanatkomponente 2 | 150 |
| Isocyanatkomponente 3 | 170 |
| Vergleichsbeispiel 1 | 140 |
| Vergleichsbeispiel 2 | 200 |
| Vergleichsbeispiel 3 | 170 |

### B) Weitere anstrichtechnische Eigenschaften

Als weitere anstrichtechnische Eigenschaften der Beschichtungsmittel entsprechend der vorliegenden Erfindung bzw. dem Stand der Technik wurden Verträglichkeit, Oberflächenklebrigkeit, Auftreten von Kratern und/oder Blasen, Aushärtungszeiten bis zum Erreichen einer Sand- bzw. Drucktrocknung, sowie die Verstreichbarkeit und das Ablaufverhalten geprüft.

Die Verträglichkeit wurde visuell nach dem Aussehen der Klarlackfilme beurteilt: 0 = vollkommen transparent bis 5 = vollkommen trüb. Die Beurteilung der Oberflächenklebrigkeit wurde nach folgender Skala vorgenommen: bester Wert 0 (trocken), schlechtester Wert 5 (klebrig). Auch das Auftreten von Blasen und Kratern wurde mit einer von 0 bis 5 reichenden Skala (0 als bestmögliche Beurteilung) bewertet.

Die Aushärtungszeit bis zum Erreichen der Sandtrocknung wurde folgendermaßen bestimmt: Nach Aufziehen des Nassfilms auf eine Glasplatte wurde im Abstand von jeweils 5 min Sand aufgestreut. Die Sandtrocknung ist erreicht, wenn es erstmals gelingt, den Sand mit einem trockenen Pinsel wieder vollständig (ohne Anhaftung) von der Filmoberfläche zu entfernen. Die Aushärtungszeit bis zum Erreichen der Drucktrocknung wurde gemaß DIN 53150 bestimmt.

Zur Charakterisierung der Verstreichbarkeit wurde die Leichtigkeit beurteilt, mit der mit einem Malerpinsel ein Nassfilm auf eine Stahloberfläche (Sa 2 1/2) appliziert werden kann. Die beste Note (0) entspricht einem sehr geringen Streichwiderstand und einer guten Verteilbarkeit (ohne bleibenden Pinselriefen im Film), die schlechteste Note (5) einem hohen Streichwiderstand ("stockige Konsistenz"), stark ausgeprägten Pinselriefen und einer ungenügenden Verteilbarkeit. Das Ablaufverhalten an senkrechten Flächen wird von 0 (steht an der senkrechten Fläche) bis 5 (läuft ab wie Wasser) beurteilt.

### B1) 90 µm Nassfilmdicke/ Eigenschaften von erfindungsgemäßen Klarlacken

| | Festkörper (%) *) | Verträglichkeit | Oberflächenklebrigkeit | Blasen/Krater |
|---|---|---|---|---|
| Beispiel 1 | 100 | 0 | 0 | 0 |
| Beispiel 2 | 100 | 0 | 0 - 1 | 0 |
| Beispiel 3 | 100 | 3 - 4 | 0 | 0 |
| Beispiel 4 | 100 | 3 - 4 | 1 | 0 |
| Beispiel 5 | 100 | 3 | 1 | 0 |
| Beispiel 6 | 100 | 3 | 2 | 0 |

| | | | | |
|---|---|---|---|---|
| *) Gehalt an zumindest schwerflüchtigen bzw. nichtflüchtigen Anteilen | | | | |

### B2) 60 µm Nassfilmdicke/ Eigenschaften von erfindungsgemäßen und dem Stand der Technik entsprechenden Klarlacken

| | Sandtrocknung (min) | Drucktrockung (min) | Verstreichbarkeit | Ablaufverhalten |
|---|---|---|---|---|
| Beispiel 1 | >360 | >420 | 3 | 1-2 |
| Beispiel 2 | >360 | >420 | 1-2 | 1 |
| Vergleichsbeispiel 1 | 115 | 145 | 1 - 2 | 0 |
| Beispiel 3 | >360 | >420 | 1-2 | 1 |
| Beispiel 4 | >360 | >420 | 1 | 1 |
| Vergleichsbeispiel 2 | 145 | 195 | 1 - 2 | 0 |
| Beispiel 5 | 345 | >420 | 2 | |
| Beispiel 6 | >420 | >420 | 1 - 2 | |
| Vergleichsbeispiel 3 | 200 | 225 | 1 - 2 | 0 |

### C) Beurteilung des Korrosionsverhaltens und der Filmhaftung

Auf handentrosteten Blechtafeln (St 3) wurden stufenweise drei Schichten Beschichtungsmittel aufgetragen:
- Clearcoat als Haftgrund, basierend auf Beispielen 3 bis 6 und Isocyanatkomponenten 1 bis 3,
- Grundbeschichtung gemäß nachstehend aufgeführter Rezeptur,
- Deckbeschichtung gemäß nachstehend aufgeführter Rezeptur.

Die Trockenfilm-Schichtdicke jeder einzelnen dieser Schichten betrug 80 µm. "Stufenweiser Aufbau" bedeutet, daß jeweils ein Segment der Blechtafel nur mit dem Clearcoat, das sich anschließende Segment mit Clearcoat und Grundbeschichtung und das letzte Segment mit allen drei Schichten (in der oben genannten Reihenfolge) beschichtet wird.

### Rezeptur der Grund- und Deckbeschichtung

| Rezeptur-Bestandteil | Grundbeschichtung (Gew.-%) | Deckbeschichtung (Gew.-%) |
|---|---|---|
| Zusatzmittel MT® (Bayer) | 4,55 | --- |
| Zusatzmittel Versuchsprodukt LS 2962® (Bayer) | --- | 8,45 |
| Weichharz P 65® (Bayer) | --- | 5,65 |
| Solvesso 100® (Exxon) | 22,76 | --- |
| Acronal 700 L® (10 %-ig in Ethylacetat) (BASF) | 0,20 | 0,38 |
| Thixatrol ST® (Rheox GmbH) | 0,43 | 0,35 |
| Disperbyk 163® (Byk) | --- | 0,15 |
| Bentone 34® (Rheox GmbH) | 0,54 | 0,50 |
| Mischung Methoxypropylacetat/ Butylacetat (3:1) | --- | 2,00 |
| Bayertitan R-KB-3® (Bayer) | --- | 5,10 |
| Bayferrox 130 BM® (Bayer) | 1,26 | --- |
| Bayferrox 415® (Bayer) | --- | 0,60 |
| Chromoxidgrün GN-M® (Bayer) | --- | 3,40 |
| Bariumsulfat | 4,78 | 21,90 |
| Micro-Talc AT 1® (Norwegian Talc) | 18,47 | 2,40 |
| Blattsilikat 3530® (Mineralwerk Naintsch, Graz) | 7,83 | --- |
| Stapa 2 nl® (Eckart-Werke, Fürth) | 2,95 | --- |
| Desmodur E 21® (Bayer) | 15,13 | --- |
| Desmodur Versuchsprodukt LS 2823® | --- | 29,94 |
| Härter OZ® (Bayer) | --- | 3,68 |
| Zinkstaub Ultra 25® (Lindgens, Köln) | 20,06 | --- |
| Zusatzmittel OF® (Bayer) | 1,14 | 2,10 |
| Mischung Methoxypropylacetat/ Butylacetat (3:1) | --- | 13,40 |

Die Test-Blechtafeln wurden 18 Monate lang unter mitteleuropäischem Klima (Leverkusen, Deutschland) freibewittert. In regelmäßigen Zeitabständen wurde die Haftung auf dem Untergrund und der dabei festgestellte Grad der Unterrostung überprüft. Der Test auf Untergrund-Haftung wurde mit einem Federmesser vorgenommen. Dabei wurde versucht, einen Teil der Beschichtung vom Untergrund abzuschaben. Benotung 0: sehr schwierig abkratzbar; Benotung 5: sehr leicht abkratzbar. Die Beurteilung der Rostgrade erfolgte nach der Ri-Skala (Rost international).

Folgende Ergebnisse wurden gefunden [o.B. = ohne Befund; m = Monat; IC = Isocyanatkomponente]:

### A) Haftung bzw. Rostgrade für die Clearcoat-Schicht allein

| nach | Bsp. 3 | Bsp. 4 | Bsp. 5 | Bsp. 6 | IC 1 | IC 2 | IC 3 |
|---|---|---|---|---|---|---|---|
| 1 m | o.B. | o.B. | o.B. | o.B. | o.B. | o.B. | o.B. |
| 3 m | o.B. | o.B. | o.B. | o.B. | o.B. | o.B. | o.B. |
| 6 m | Ri 4 | Ri 4 | o.B. | Ri 4 | o.B. | o.B. | o.B. |
| 12 m | 5 | 5 | 4 | 4 - 5 | 2 | o.B. | o.B. |
| 18 m | 5 | 5 | 4 | 5 | 2 - 3 | 2 - 3 | 2 - 3 |

### B) Haftung bzw. Rostgrade für Clearcoat, überschichtet mit der Grundbeschichtung

| nach | Bsp. 3 | Bsp. 4 | Bsp. 5 | Bsp. 6 | IC 1 | IC 2 | IC 3 |
|---|---|---|---|---|---|---|---|
| 1 m | o.B. | o.B. | o.B. | o.B. | o.B. | o.B. | o.B. |
| 3 m | o.B. | o.B. | o.B. | o.B. | o.B. | o.B. | o.B. |
| 6 m | o.B. | o.B. | Ri 3 | o.B. | o.B. | o.B. | Ri 3 |
| 12 m | 2 - 3 | 2 | Ri 3 | 3 | o.B. | o.B. | 2 - 3 |
| 18 m | Ri 3 | Ri 3 | Ri 3 | Ri 3 | Ri 3 | Ri 3 | Ri 3 |

### C) Haftung bzw. Rostgrade für den Dreischicht-Gesamtaufbau

| nach | Bsp. 3 | Bsp. 4 | Bsp. 5 | Bsp. 6 | IC 1 | IC 2 | IC 3 |
|---|---|---|---|---|---|---|---|
| 1 m | o.B. | o.B. | o.B. | o.B. | o.B. | o.B. | o.B. |
| 3 m | o.B. | o.B. | o.B. | o.B. | o.B. | o.B. | o.B. |
| 6 m | o.B. | o.B. | o.B. | o.B. | o.B. | o.B. | o.B. |
| 12 m | 2 - 3 | 2 - 3 | 2 | 2 - 3 | o.B. | o.B. | 2 |
| 18 m | 2 - 3 | 2 | 2 | 2 - 3 | Ri 1 | Ri 1 | 2 |

Aus den Tabellen geht klar hervor, daß die erfindungsgemäßen Polyurethan-Einkomponentenbeschichtungsmittel gute Korrosionsschutzeigenschaften sowie ausreichende Haftung bei Überschichten mit anderen Polyurethan-Einkomponentenbeschichtungen aufweisen.

Ein Clearcoat-Beschichtungsfilm nach Beispiel 3, nach 6 Monaten Lagerung nochmals mit einem Klarlack nach Beispiel 3 überschichtet, zeigt eine genauso gute Haftung wie ein Clearcoat-Beschichtungsfilm nach Vergleichsbeispiel 2, nach 6 Monaten Lagerung überschichtet mit einem Klarlack nach Vergleichsbeispiel 2.

Somit zeigen alle genannten Beispiele, daß die erfindungsgemäßen Einkomponentenbeschichtungsmittel bei niedriger Applikationsviskosität und ohne Freisetzung umweltschädlicher Lösemittel sich ohne Probleme verarbeiten lassen und Filme mit guter Korrosionsschutz-Wirksamkeit, relativ hoher blasenfreier Schichtdicke und guter Überarbeitbarkeit ergeben.

## Patentansprüche

1. Feuchtigkeitshärtende Einkomponenten-Beschichtungsmittel, bestehend im wesentlichen aus einer Polyisocyanatkomponente als Bindemittel und gegebenenfalls den üblichen Hilfs- und Zusatzmitteln der Lacktechnologie, dadurch gekennzeichnet, daß die Polyisocyanatkomponente ein im wesentlichen aus
A) 100 Gewichtsteilen eines gegebenenfalls Carbodiimid- und/oder Uretonimin-modifizierten Polyisocyanats oder Polyisocyanatgemischs der Diphenylmethanreihe mit einem NCO-Gehalt von 20 bis 33 Gew.-%,
B) 40 bis 150 Gewichtsteilen an NCO-Prepolymeren mit einem NCO-Gehalt von 3,0 bis 34 Gew.-%, hergestellt durch Reaktionen von
a) mindestens einem aromatischen Polyisocyanat mit einem NCO-Gehalt von 20 bis 34 Gew.-% mit
b) einer unterschüssigen Menge einer Polyhydroxylkomponente, bestehend aus
b1) mindestens einem Ether-, Ester-, Thioether- und/oder Carbonatgruppen aufweisenden Polyol des Molekulargewichtbereichs 134 bis 6 000, gegebenenfalls in Abmischung mit
b2) bis zu 40 Gew.-%, bezogen auf das Gesamtgewicht der Komponente b), mindestens eines, der Definition von b1) nicht entsprechenden 1- bis 6-wertigen Alkohols des Molekulargewichtbereichs 32 bis 300, sowie
c) 0,2 bis 250 Gew.-% eines ausgewählten, nicht hydrolysierbaren oder schwer hydrolysierbaren Weichmachers mit einem Flammpunkt über 150°C und/oder eines ausgewählten hochsiedenden Lösemittels mit einem Flammpunkt über 120°C und einem Siedepunkt (bei Atmosphärendruck) oberhalb 230°C,
bestehendes Gemisch darstellt.

2. Feuchtigkeitshärtendes Einkomponenten-Beschichtungsmittel gemäß Anspruch 1, dadurch gekennzeichnet, daß die Komponente a) aus einem Polyisocyanat oder Polyisocyanatgemisch der Diphenylmethanreihe besteht.

3. Feuchtigkeitshärtendes Einkomponenten-Beschichtungsmittel gemäß Anspruch 1, dadurch gekennzeichnet, daß die Komponente b) eine mittlere Hydroxylfunktionalität von 2 bis 4 aufweist und ausschließlich aus b1) Ether- und/oder Estergruppen ausweisenden Polyolen des Molekulargewichtbereichs 500 bis 6 000 besteht.

4. Feuchtigkeitshärtendes Einkomponenten-Beschichtungsmittel gemäß Anspruch 3, dadurch gekennzeichnet, daß die Komponente b1) aus ausschließlich Polyetherpolyolen, die gegebenenfalls eine tertiäre Aminogruppe enthalten, des Molekulargewichtbereichs 500 bis 6 000 besteht.

5. Feuchtigkeitshärtendes Einkomponenten-Beschichtungsmittel gemäß Anspruch 1, dadurch gekennzeichnet, daß die Komponente c) aus einem aromatischen Phosphatester, einem Phenylalkylsulfonat oder einem cyclischen Alkylencarbonat-Ester mit einem Flammpunkt über 120°C und einem Siedepunkt (Atmosphärendruck) über 230°C besteht.

6. Verwendung der feuchtigkeitshärtenden Einkomponenten-Beschichtungsmittel gemäß Anspruch 1 zur Herstellung von Überzügen auf beliebigen Substraten.

7. Verwendung der feuchtigkeitshärtenden Einkomponenten-Beschichtungsmittel gemäß Anspruch 1 zur Herstellung von Überzügen auf metallischen Substraten.

8. Verwendung der feuchtigkeitshärtenden Einkomponenten-Beschichtungsmittel gemäß Anspruch 1 zur Herstellung von Grund- und/oder Zwischenbeschichtungen im Korrosionsschutz.
